# EUROPEAN PATENT SPECIFICATION

(11) **EP 4 498 095 B1**
(45) Date of publication and mention of the grant of the patent: **16.09.2026**
(21) Application number: 23188428.9
(22) Date of filing: 28.07.2023
(51) Int. Cl.: G01P 15/08, G06N 3/08, G06N 20/00, G06N 20/10, G08G 1/16, G08G 1/01

(54) **METHOD AND APPARATUS FOR DETECTING A COLLISION BETWEEN AN OBSTACLE AND A MOVING VEHICLE**
VERFAHREN UND VORRICHTUNG ZUR ERKENNUNG EINER KOLLISION EINES HINDERNISSES MIT EINEM SICH BEWEGENDEN FAHRZEUG
PROCÉDÉ ET APPAREIL DE DÉTECTION D'UNE COLLISION ENTRE UN OBSTACLE ET UN VÉHICULE EN MOUVEMENT

(43) Date of publication of application: 29.01.2025
(73) Proprietor: TOYOTA JIDOSHA KABUSHIKI KAISHA, Toyota-shi, Aichi-ken, 471 8571 (JP)
(72) Inventor: JORGE QUES, Fernando, 1140 BRUSSELS (BE)
(74) Representative: Cabinet Beau de Loménie

(56) References cited:
- WO-A1-01/87695
- CN-A- 109 830 002
- US-A1- 2019 354 838
- US-A1- 2022 118 931
- US-A1- 2022 161 789
- ZHU MEIXIN ET AL: "Real-time crash identification using connected electric vehicle operation data", ACCIDENT ANALYSIS & PREVENTION, PERGAMON, GB, vol. 173, 26 May 2022 (2022-05-26), XP087093358, ISSN: 0001-4575, [retrieved on 20220526], DOI: 10.1016/J.AAP.2022.106708

## Description

### BACKGROUND OF THE INVENTION

### 1. Field of the invention

The present disclosure relates to the field of vehicle control systems and, more particularly, to a method for detecting a collision between an obstacle and a moving vehicle.

### 2. Description of Related Art

Increased traffic density on the roads requires drivers of vehicles to pay full attention to surrounding vehicles while trying to avoid any possible obstacle on their travel path. However, as the human cannot remain continuously concentrated on all the tasks to be performed on the travel path in order to ensure its safety, this may lead to driving errors which can cause serious damage to the driver and their car and/or to the surroundings such as pedestrians or other vehicles.

Nearly all road accidents are due to human error, while the remaining accidents are attributed to environmental factors and mechanical features. In fact, human error is believed to play a role in 94% of accidents, encompassing driver's inattention, internal and external distractions, and inadequate surveillance. This makes driver failures or errors a significant concern for public safety.

The automation of vehicles then represents a major challenge for automotive safety and driving optimization. In an effort to eliminate human error while driving a vehicle, Advanced Driver Assistance Systems (ADAS), also known as "driver assistance systems" have been designed to guide the driver and assist him in risk anticipation by automating, improving, or adapting some or all of the tasks related to driving a vehicle. Thus, the driver can be relieved of tasks that may distract him.

These driver assistance systems rely generally on sensors to assist the driver throughout their journey and often communicate with a server to receive real-time information along the vehicle's route. Modern assistance driver systems also provide additional information related to the route, such as weather conditions, traffic congestion, duration, and disruptions on the road (diversions or lane closures, for example). The driver assistance system can also be configured to provide information, including regulatory indications, such as speed limits or the presence of checkpoints.

Driver assistance may further encompass secondary tasks such as location finding and obstacle detection. In particular, it enables the anticipation of potential collisions, such as with stationary obstacles (traffic barriers, signs, or trees, for example) or with moving obstacles like other vehicles.

To detect obstacles in the vehicle's environment, existing perception solutions are commonly used. They rely on sensors as front-facing cameras for lane detection and obstacle recognition. To increase the accuracy of such recognition, various obstacle detection systems have been developed by using data fusion, machine learning, and sensors such as LiDAR, radar, and GPS that collect data from the vehicle's external environment. The collected data is then processed, leading either to autonomous vehicle decisions (e.g. automatic braking, engine power limitation) or to transmission of information to the driver through visual alerts, audio signals, or steering wheel vibrations, leaving then the driver in charge of making decisions.

In order to avoid collisions with recognized obstacles, machine learning algorithms have been developed that typically rely on the position of the vehicle with respect to said obstacles. These algorithms define a predefined evolving zone wherein the vehicle must remain to prevent such collisions. For example, document US 2019/354838 A1 relates to detecting automobile accidents using a machine-learned model on data collected by a mobile device or sensors located within the automobile and contextual data regarding a potential accident.
Document US 2022/118931 A1 relates to a method for vehicle crash prediction using multi-vehicle data.
Document ZHU MEIXIN ET AL: "Real-time crash identification using connected electric vehicle operation data", ACCIDENT ANALYSIS & PREVENTION, PERGAMON, GB, vol. 173, 26 May 2022 (2022-05-26), XP087093358, ISSN: 0001-4575, DOI: 10.1016/J.AAP.2022.106708 relates to a vehicle crash identification algorithm developed based on machine learning techniques.

However, there are situations, e.g. dense traffic with multiple vehicles, pedestrians, and complex road layouts, where it becomes challenging for the machine learning algorithms to anticipate and respond to the actions of all the surrounding obstacles simultaneously, resulting in an accident that is easily detectable by the driver assistance system due to the severity of the impact.

The detection of such accident subsequently enables the driver assistance system to alert emergency services in case of passenger's injuries and/or to notify the vehicle's manufacturer about damages that have occurred and their location for repair purpose.

But, when a collision occurs with another vehicle wherein the force of the impact is not high enough to trigger airbag deployment, but enough to induce damage to the vehicles, it is then difficult to detect this collision as it may be confounded with an acceleration that does not incur in vehicle damage and that may be caused for example by aggressive driving, bad road conditions, i.e. potholes, bricks or other road irregularities such as speedbumps that may cause discomfort to the passengers.

Such collision is considered as a "minor" collision which refers to a low-impact accident where the resulting damage does not significantly affect the drivability or the safety of the vehicle. In other words, a minor collision may involve a low-speed incident wherein the vehicle makes contact with an obstacle, resulting in superficial damage.

Even though minor collisions may not result in significant injuries or major damage, detecting and documenting these collisions allows for a proper assessment of the vehicle's safety systems, ensuring that they are functioning as intended. It also helps repair technicians to assess if repairs are necessary to restore the vehicle's condition. Thus, addressing the minor damages helps to prevent them from worsening over time and potentially leading to more significant issues.

Currently, the existing solutions do not adequately and easily identify minor collisions when they occur. Especially, such solutions provide machine learning models that require large amounts of input data to assess the occurrence of a minor collision. These models do not only tend to confuse minor collision with acceleration that does not incur in vehicle damage, but also request extensive computational resources and present implementation challenges in the embedded systems of the vehicle.

### SUMMARY

The object of the present invention is to at least substantially remedy the above-mentioned drawbacks. In this respect, the present disclosure relates to a computer-implemented method for detecting a collision between at least one obstacle and a moving vehicle by a machine learning classification model in accordance with claim 1.

For conciseness, the method is referred to hereinafter as the collision detection method.

As used herein, for conciseness and unless the context indicates otherwise, "a", "an", and "the" are intended to refer to "at least one" or "each" and to include plural forms as well. Conversely, generic plural forms include the singular. Further, the "at least one on-vehicle sensor" comprises one on-vehicle sensor or a plurality of on-vehicle sensors. The on-vehicle sensor may be integrated into the vehicle to collect data about its surroundings or internal systems.

According to the present disclosure, the obtained sensor data provides information about the acceleration values of the vehicle. The sensor data is time-series data that is collected at a plurality of corresponding timings. In other words, the sensor data is collected on sampling times, i.e. at specific intervals or time points. Sensor data is then collected periodically with a regular time interval.

As an example, the on-vehicle sensor may measure 700 accelerations through 7 seconds and may store them to provide them as a time-series of 700 accelerations. The sensor data is then collected every 7 seconds. Of course, the sensor data may be collected during other periods as 15 seconds, 13 seconds, 10 seconds or 5 seconds for example. Such periods may be set by a person skilled in the art based on the computing resources of the vehicle.

In order to provide this information, the on-vehicle sensor may be an accelerometer that may detect changes in the vehicle's speed along three perpendicular axes and then may determine the acceleration in these directions.

Collecting sensor data as time-series helps to identify if a peak acceleration value among said acceleration values is greater than a predetermined threshold. If that is the case, the first, second and third sets of sensor data as defined above provide information about the driver's reaction, e.g. aggressive driving. It is then possible to distinguish between acceleration due to a minor collision and acceleration that does not incur in vehicle damage and that may be caused for example by aggressive driving, bad road conditions, i.e. potholes, bricks or other road irregularities such as speedbumps that may cause discomfort to the passengers.

To this end, the first, second and third sets of sensor data are processed in order to extract time-series statistical data over the first, second and third time interval, noting that a time-series statistical data may refer to a collection of data points recorded over a time interval. Further, the term "statistical data" may refer to statistical values such as a maximum value among an extracted set of sensor data values or an average value of the extracted set of sensor data. In this respect, only data, that comprises substantive information intended to distinguish between acceleration due to a minor collision and acceleration that does not incur in vehicle damage, are provided to the machine learning classification model.

The machine learning classification model is then trained to execute a function of determining whether the peak acceleration value is representative of a collision between the moving vehicle and an obstacle.

The person skilled in the art knows that there are different machine learning classification models able to execute such function. They may select the architecture of the machine learning classification model based on the computing resources available in the vehicle for example.

Optionally, the collected acceleration value comprises a longitudinal acceleration value and a lateral acceleration value, and wherein the collected sensor data further comprise a yaw rate of the vehicle, a speed value of the vehicle, a position of an accelerator pedal of the vehicle, a pressure value of a brake master cylinder of the vehicle and a value of a steering angle speed of the vehicle.

The longitudinal acceleration may refer to the acceleration experienced by the vehicle in the direction of its motion, either as forward acceleration or deceleration, when the lateral acceleration may refer to the acceleration experienced by the vehicle in a direction perpendicular to its motion, commonly experienced during cornering or turning.

To obtain the longitudinal acceleration, an on-vehicle accelerometer or a wheel speed sensor may be used. More precisely, the accelerometer may measure changes in velocity along a longitudinal axis that is parallel to the motion direction of the vehicle, while the wheel speed sensor may measure changes in wheel speeds which is directly related to the change in the vehicle's velocity.

The lateral acceleration value may be obtained by the same on-vehicle accelerometer that may measure changes in velocity along a perpendicular axis to the motion direction of the vehicle. Alternatively or additionally, the lateral acceleration may be provided by a gyroscope that may measure the vehicle's angular velocity which helps to determine the lateral acceleration when the vehicle undergoes rotational motion during cornering for example.

The other collected sensor data defined above are also provided by on-vehicle sensors. For example, the yaw rate may be provided by the on-vehicle gyroscope when the position of the accelerator pedal may be provided by an on-vehicle throttle position sensor.

Optionally, the processing step comprises filtering said first, second and third sets of sensor data before extracting the first, second and third time-series statistical data.

In order to improve the accuracy, the quality and the reliability of the collected sensor data, i.e. the first, second and third sets of sensor data, it is advantageous to filter them before processing them..

In fact, the collected data (raw data) may be noisy or may contain missing values, outliers and errors. Filtering the first, second and third sets of sensor data may thus involve removing or correcting these issues. Filtering such sets of sensor data may also include normalizing and/or scaling them in order to bring them to a common scale.

Optionally, the predetermined threshold is set between 0.3G (2.94 m/s²) and 0.6G (5.88 m/s²).

The unit "G" refers to the acceleration due to gravity. More precisely, 1G is equivalent to the standard acceleration due to gravity on the surface of the Earth, which is approximately 9.81 meters per second squared (m/s²).

Optionally, the first time interval comprises a first sub-interval prior and adjacent to the corresponding timing of the acceleration peak and a second sub-interval subsequent and adjacent to the corresponding timing of the acceleration peak, the first time interval corresponding to a sum in time of the first sub-interval and the second sub-interval.

In other words, the first sub-interval and the second sub-interval are sub-intervals around the acceleration peak. For example, the sum in time of the first sub-interval and the second sub-interval may be set between 1 and 3 seconds. Of course, the person skilled in the art is able to choose the duration of the first and the second sub-intervals to obtain this sum.

Optionally, the second time interval is set between 2 and 5 seconds, and wherein the third time interval is set between 2 and 10 seconds.

Optionally, the sensor data are collected from the at least one sensor via a controller area network bus.

Of course, the person skilled in the art is able to use other well-known means and well-known techniques to collect data from the on-vehicle sensor.

Optionally, the at least one obstacle is a stationary obstacle or a moving obstacle.

The "stationary obstacle" is fixed or immobile in the vehicle's surroundings, such as parked cars, traffic barriers, road signs, buildings, or trees. While the stationary obstacle is not currently obstructing the vehicle's path, it has the potential to become an obstacle that may cause a collision with the moving vehicle if it approaches it too closely or deviates from its intended path.

The "moving obstacle" is in motion within the vehicle's surroundings, including other vehicles, pedestrians, cyclists, or animals. This moving obstacle has the potential to intersect with the vehicle's path and create a collision risk if their trajectories converge.

The present disclosure further relates to a computer program set including instructions for executing the steps of the above-described computer-implemented method when said program set is executed by one computer.

This program set can use any programming language and take the form of source code, object code, or a code intermediate between source code and object code, such as a partially compiled form or any other desirable form.

The present disclosure further relates to an apparatus for detecting a collision between at least one obstacle and a moving vehicle by an on-vehicle machine learning classification model in accordance with claim 9.

The apparatus referred to hereinafter as the collision detection apparatus, may be configured to carry out the above-mentioned collision detection method and may have part or all of the above-described features. The collision detection apparatus may have the hardware structure of a computer.

The present disclosure also relates to a vehicle comprising an apparatus for detecting a collision, as described above.

The term "vehicle" may be directed to an apparatus capable of transporting people or objects from one location to another, such as a car or a motorcycle.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
- Fig. 1 is a block diagram of a collision detection apparatus according to an embodiment of the present disclosure; and
- Fig. 2 is a flowchart of a collision detection method according to an embodiment of the present disclosure.

### DETAILED DESCRIPTION OF EMBODIMENTS

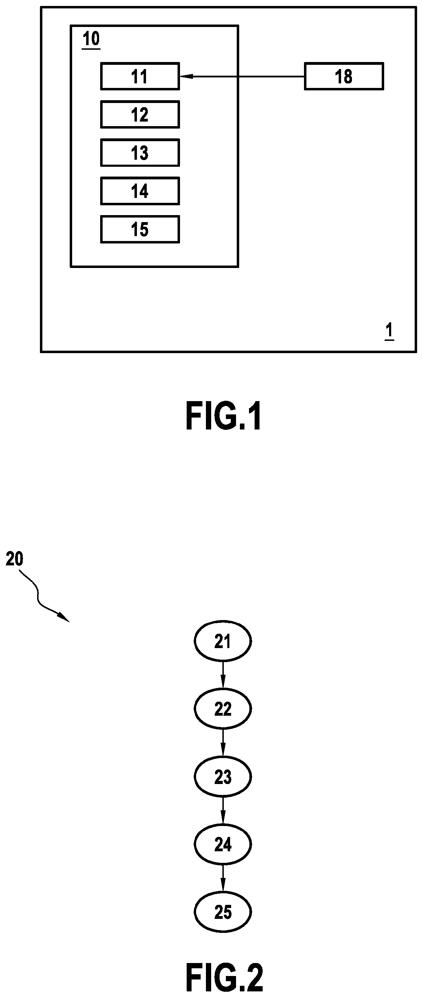

Figure 1 shows a block diagram of a collision detection apparatus 10 comprising a collecting module 11, a delimiting module 12, an extracting module 13, a processing module 15, and an applying module 14 according to embodiments of the present disclosure. The collision detection apparatus 10 may be located inside a vehicle 1 which may be, without limitation, an autonomous or semi-autonomous vehicle.

The collision detection apparatus 10 may be configured to detect a collision between at least one obstacle and the vehicle 1 during its motion by an on-vehicle machine learning classification model.

Such collision is considered minor when it refers to a low-impact accident where the resulting damage does not significantly affect the drivability or the safety of the vehicle 1. In other words, a minor collision may involve a low-speed incident wherein the vehicle 1 makes contact with an obstacle, resulting in superficial damage.

For example, a minor collision may occur due to a collision with another vehicle wherein the force of the impact is not high enough to trigger airbag deployment, but enough to induce damage to the vehicles. It is then difficult to detect this collision as it may be confounded with an acceleration that does not incur in vehicle damage caused for example by aggressive driving, bad road conditions, i.e. potholes, bricks or other road irregularities such as speedbumps that may cause discomfort to the passengers. Thus, the collision detection apparatus 10 is configured to distinguish between acceleration due to a minor collision and acceleration that does not incur in vehicle damage.

Such vehicle 1 may be directed to an apparatus capable of transporting people from one location to another, such as a car or a motorcycle, and may be categorized into different levels based on the extent of automation and human involvement in the driving tasks.

The collision detection apparatus 10 may comprise an electronic circuit, a processor (shared, dedicated, or group), a combinational logic circuit, a memory that executes one or more software programs, and/or other suitable components that provide the described functionality. In other words, the collision detection apparatus 10 may be a computer device. The collision detection apparatus 10 may be connected to a memory, which may store data, e.g. at least one computer program, which, when executed, carries out the collision detection method according to the present disclosure.

For example, the memory can be a ROM (for "Read Only Memory"), a CD ROM, a microelectronic circuit ROM, or in the form of magnetic storage means, for example, a diskette (floppy disk), a flash disk, a SSD (for "Solid State Drive") or a hard disk.

Alternatively, the memory can be an integrated circuit in which the program is incorporated, the circuit being adapted to execute the collision detection method or to be used in its execution.

The collecting module 11 is a module for collecting sensor data, comprising acceleration values, from at least one on-vehicle sensor 18 at a plurality of corresponding timings during motion of the vehicle 1 (the moving vehicle). Such sensor data are collected from the on-vehicle sensor 18 via a controller area network bus (commonly named CAN).

The sensor data provides information about the acceleration values of the vehicle 1. The sensor data is time-series data that is collected at a plurality of corresponding timings. In other words, the sensor data is collected on sampling times, i.e. at specific intervals or time points. Sensor data is then collected periodically with a regular time interval.

As an example, the on-vehicle sensor 18 may measure 700 accelerations through 7 seconds and may store them in a memory to provide them as a time-series of 700 accelerations. The sensor data is then collected every 7 seconds. Of course, the sensor data may be collected during other periods as 15 seconds, 13 seconds, 10 seconds or 5 seconds. These periods may be set by a person skilled in the art based on the computing resources for example.

In order to provide such information, the on-vehicle sensor 18 may be an accelerometer that may detect changes in the vehicle's speed along three perpendicular axes and then may determine the acceleration in these directions.

With this on-vehicle accelerometer, the collecting module 11 may collect a longitudinal acceleration value and a lateral acceleration value. More precisely, the longitudinal acceleration may refer to the acceleration experienced by the vehicle 1 in the direction of its motion, either as forward acceleration or deceleration, when the lateral acceleration may refer to the acceleration experienced by the vehicle 1 in a direction perpendicular to its motion, commonly experienced during cornering or turning.

The accelerometer may thus measure changes in velocity along a longitudinal axis that is parallel to the motion direction of the vehicle 1 to obtain the longitudinal acceleration value, when it measures changes in velocity along a perpendicular axis to the motion direction of the vehicle 1 to obtain the lateral acceleration value.

Of course, the person skilled in the art is able to use other on-vehicle sensors 18 either individually or in combination to collect acceleration values, i.e. the longitudinal acceleration and the lateral acceleration, directly or indirectly following series of calculations.

The collecting module 11 may be configured to further collect sensor data comprising a yaw rate of the vehicle 1, a speed value of the vehicle 1, a position of an accelerator pedal of the vehicle 1, a pressure value of a brake master cylinder of the vehicle 1 and a value of a steering angle speed of the vehicle 1.

For example, the yaw rate may be provided by the gyroscope as the on-vehicle sensor 18 when the position of the accelerator pedal may be provided by an on-vehicle throttle position sensor as the on-vehicle sensor 18.

The receiving module 11 may be implemented as software running on the collision detection apparatus 10 or may be implemented partially or fully as a hardware element of the collision detection apparatus 10.

The delimiting module 12 is a module for delimiting, when a peak acceleration value among said acceleration values is greater than a predetermined threshold, a first time interval comprising the corresponding timing of the peak acceleration value.

The delimiting module 12 may be implemented as software running on the driver collision detection apparatus 10 or may be implemented partially or fully as a hardware element of the collision detection apparatus 10.

In particular, the driver collision detection 10 may comprise a program that includes both the collecting module 11 and the delimiting module 12. Alternatively, the collecting module 11 may be realized as an independent program (in particular, beside a program forming the delimiting module 12).

Collecting sensor data as time-series helps to identify if a peak acceleration value among said acceleration values is greater than the predetermined threshold which means that the peak acceleration value is not usual when driving.

The delimiting module 12 is then configured for delimiting the first time interval comprising the corresponding timing of the peak acceleration value by dividing in it into a first sub-interval prior and adjacent to the corresponding timing of the acceleration peak and a second sub-interval subsequent and adjacent to the corresponding timing of the acceleration peak.

In particular, the first sub-interval and the second sub-interval are sub-intervals around the acceleration peak. For example, the sum in time of the first sub-interval and the second sub-interval may be set between 1 and 3 seconds. Of course, the person skilled in the art is able to choose the duration of the first and the second sub-intervals to obtain this sum.

However, identifying the peak acceleration value is not sufficient to detect a minor collision between an obstacle and the moving vehicle 1. In fact, the peak acceleration value, even being greater than the predetermined threshold, can be confused with a usual acceleration if the driver has an aggressive driving for example. It is then advantageous to collect said sensor data before and after the occurrence of the peak acceleration value that is greater than the predetermined threshold in order to characterize the driver's behaviour.

Accordingly, the extracting module 13 is a module for extracting a first set of sensor data during the first time interval, a second set of sensor data collected during a second time interval prior and adjacent to the first time interval, and a third set of sensor data collected during a third time interval subsequent and adjacent to the first time interval.

The second time interval may be set between 2 and 5 seconds, and the third time interval may be set between 2 and 10 seconds.

The extracting module 13 may be implemented as software running on the collision detection apparatus 10 and may also be implemented partially or fully on the collision detection apparatus 10 as a hardware element of the collision detection apparatus 10.

In particular, the extracting module 13 may comprise a program that includes together the collecting module 11 and the delimiting module 12. Alternatively, the extracting module 13 may be realized as an independent program (in particular, beside a program forming both the collecting module 11 and the delimiting module 12, or beside a program forming the delimiting module 12 and beside a program forming the collecting module 11).

The processing module 15 is a module for processing the first set of sensor data in order to extract a first time-series statistical data over the first time interval. The processing module 15 is also configured to process the second set of sensor data to extract a second time-series statistical data over the second time interval, and to process the third set of sensor data in order to extract a third time-series statistical data over the third time interval.

Further, in order to improve the accuracy, the quality and the reliability of the collected sensor data, the processing module 15 may be configured to filter the first, second and third sets of sensor data before extracting the first, second and third time-series statistical data.

In fact, the collected sensor data (raw data) may be noisy or may contain missing values, outliers and errors. In this situation, filtering the first, second and third sets of sensor data may thus involve removing or correcting these issues.

Filtering the first, second and third sets of sensor data may also include normalizing and/or scaling them in order to bring them to a common scale.

The processing module 15 may be implemented as software running on the driver collision detection apparatus 10 or may be implemented partially or fully as a hardware element of the collision detection apparatus 10.

The applying module 14 is a module for applying said first, second and time-series statistical data to the machine learning classification model to determine whether the peak acceleration value is representative of a collision that may be minor, between the moving vehicle 1 and the obstacle. It is then possible to distinguish between acceleration due to a minor collision and acceleration that does not incur in vehicle damage.

The applying module 14 may be implemented as software running on the collision detection apparatus 10 or may be implemented partially or fully as a hardware element of the collision detection apparatus 10. In particular, the collision detection apparatus 10 may comprise a program which includes together the collecting module 11, the delimiting module 12 and the extracting module 13. Alternatively, the applying module 14 may be realized as independent program (in particular beside a program forming together the delimiting module 12, the collecting module 11, the extracting module 13, and the processing module 15 or beside a program forming the delimiting module 12, beside a program forming the collecting module 11 beside a program forming the extracting module 13, and beside a program forming the processing module 15).

The tasks carried out by the collision detection apparatus 10 are detailed hereinafter with respect to the corresponding collision detection method, an embodiment of which is illustrated in Fig. 2.

Figure 2 is a flowchart of the collision detection method 20 according to an embodiment of the present disclosure. The collision detection method 20 is performed for detecting a collision between at least one obstacle and the moving vehicle 1 by the machine learning classification model. More precisely, the collision detection method 20 is executed to distinguish between acceleration due to a minor collision and acceleration that does not incur in vehicle damage.

For example, a minor collision may occur due to a collision with another vehicle wherein the force of the impact is not enough to trigger airbag deployment, but enough to induce damage to the vehicles. It is then difficult to detect this collision as it may be confounded with an acceleration that does not incur in vehicle damage that may be caused for example by aggressive driving, bad road conditions, i.e. potholes, bricks or other road irregularities such as speedbumps that may cause discomfort to the passengers.

To this end, the collision detection method 20 comprises a step 21 performed by the collecting module 11 to collect the sensor data, comprising the acceleration values at the plurality of corresponding timings during the motion of the moving vehicle 1. As explained above, the sensor data are collected from said at least on-vehicle sensor 18 illustrated in Figure 1.

The collected acceleration value may comprise the longitudinal acceleration value and the lateral acceleration value, the yaw rate of the vehicle 1, the speed value of the vehicle 1, the position of the accelerator pedal of the vehicle 1, the pressure value of the brake master cylinder of the vehicle 1 and a value of the steering angle speed of the vehicle 1.

For example, the yaw rate may be provided by the gyroscope as the on-vehicle sensor 18 when the position of the accelerator pedal may be provided by an on-vehicle throttle position sensor as the on-vehicle sensor 18.

That is, the collision detection method 20 further comprises a step 22 performed by the delimiting module 12 to delimit, when a peak acceleration value among said acceleration values is greater than the predetermined threshold, the first time interval comprising the corresponding timing of the peak acceleration value. As an example, the predetermined threshold may be set between 0.3G and 0.6G.

Delimiting the first time interval further comprises dividing in it into the first sub-interval prior and adjacent to the corresponding timing of the acceleration peak and the second sub-interval subsequent and adjacent to the corresponding timing of the acceleration peak.

In particular, the first sub-interval and the second sub-interval are sub-intervals around the acceleration peak. For example, the sum in time of the first sub-interval and the second sub-interval may be set between 1 and 3 seconds.

The collision detection method 20 further comprises a step 23 performed by the extracting module 13 to extract the first set of sensor data collected during the first time interval, the second set of sensor data collected during the second time interval prior and adjacent to the first time interval, and the third set of sensor data collected during the third time interval subsequent and adjacent to the first time interval.

The second time interval may be set between 2 and 5 seconds, and the third time interval may be set between 2 and 10 seconds.

The collision detection method 20 further comprises a step 24 performed by the processing module 15 to process said first set of sensor data in order to extract a first time-series statistical data over the first time interval, to process said second set of sensor data in order to extract a second time-series statistical data over the second time interval, and to process said third set of sensor data in order to extract a third time-series statistical data over the third time interval.

The step 24 optionally further comprises sub-step of filtering said first, second and third sets of sensor data before extracting the first, second and third time-series statistical data in order to improve the accuracy, the quality and the reliability of the collected sensor data.

Filtering the first, second and third sets of sensor data may also include normalizing and/or scaling them in order to bring them to a common scale.

Finally, the collision detection method 20 further comprises a step 25 performed by the applying module 14 to apply said first, second and third time-series statistical data to the machine learning classification model to determine whether the peak acceleration value is representative of a collision between the moving vehicle 1 and an obstacle.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments, as long as these combinations fall within the scope of the appended claims. Therefore, the description and the drawings should be considered in an illustrative rather than in a restrictive sense.

## Claims

1. A computer-implemented method (20) for detecting a collision between at least one obstacle and a moving vehicle (1) by a machine learning classification model, the method comprising the following steps:
a) collecting sensor data, comprising acceleration values, from at least one on-vehicle sensor (18) at a plurality of corresponding timings during motion of the moving vehicle (1);
the computer-implemented method being **characterized in that** it comprises:
b) delimiting, when a peak acceleration value among said acceleration values is greater than a predetermined threshold, a first time interval comprising the corresponding timing of the peak acceleration value, the first time interval comprising a first sub-interval prior and adjacent to the corresponding timing of the acceleration peak and a second sub-interval subsequent and adjacent to the corresponding timing of the acceleration peak, the first time interval corresponding to a sum in time of the first sub-interval and the second sub-interval;
c) extracting a first set of sensor data collected during the first time interval, a second set of sensor data collected during a second time interval prior and adjacent to the first time interval, and a third set of sensor data collected during a third time interval subsequent and adjacent to the first time interval;
d) processing said first set of sensor data in order to extract a first time-series statistical data over the first time interval, processing said second set of sensor data in order to extract a second time-series statistical data over the second time interval, and processing said third set of sensor data in order to extract a third time-series statistical data over the third time interval; and
e) applying said first, second and third time-series statistical data to the machine learning classification model to determine whether the peak acceleration value is representative of a collision between the moving vehicle (1) and an obstacle.

2. The computer-implemented method (20) according to claim 1, wherein the collected acceleration value comprises a longitudinal acceleration value and a lateral acceleration value, and wherein the collected sensor data further comprise a yaw rate of the vehicle (1), a speed value of the vehicle (1), a position of an accelerator pedal of the vehicle (1), a pressure value of a brake master cylinder of the vehicle (1) and a value of a steering angle speed of the vehicle (1).

3. The computer-implemented method (20) according to claim 1 or 2, wherein the processing step comprises filtering said first, second and third sets of sensor data before extracting the first, second and third time-series statistical data.

4. The computer-implemented method (20) according to any one of claims 1 to 3, wherein the predetermined threshold is set between 0.3G (2.94 m/s²) and 0.6G (5.88 m/s²).

5. The computer-implemented method (20) according to any one of claims 1 to 3, wherein the second time interval is set between 2 and 5 seconds, and wherein the third time interval is set between 2 and 10 seconds.

6. The computer-implemented method (20) according to any one of claims 1 to 5, wherein the sensor data are collected from the at least one sensor via a controller area network bus.

7. The computer-implemented method (20) according to any one of claims 1 to 6, wherein the at least one obstacle is a stationary obstacle or a moving obstacle.

8. A computer program set including instructions for executing the steps of the method of any one of claims 1 to 7 when said program set is executed by at least one computer.

9. An apparatus (10) for detecting a collision between at least one obstacle and a moving vehicle (1) by an on-vehicle machine learning classification model, the apparatus comprising:
- a collecting module (11) configured to collect sensor data, comprising acceleration values, from at least one on-vehicle sensor (18) at a plurality of corresponding timings during motion of the moving vehicle (1);
the apparatus being **characterized in that** it comprises:
- a delimiting module (12) configured to delimit, when a peak acceleration value among said acceleration values is greater than a predetermined threshold, a first time interval comprising the corresponding timing of the peak acceleration value, the first time interval comprising a first sub-interval prior and adjacent to the corresponding timing of the acceleration peak and a second sub-interval subsequent and adjacent to the corresponding timing of the acceleration peak, the first time interval corresponding to a sum in time of the first sub-interval and the second sub-interval;
- an extracting module (13) configured to extract a first set of sensor data collected during the first time interval, a second set of sensor data collected during a second time interval prior and adjacent to the first time interval, and a third set of sensor data collected during a third time interval subsequent and adjacent to the first time interval;
- a processing module (15) configured to process said first set of sensor data in order to extract a first time-series statistical data over the first time interval, to process said second set of sensor data in order to extract a second time-series statistical data over the second time interval, and to process said third set of sensor data in order to extract a third time-series statistical data over the third time interval; and
- an applying module (14) configured to apply said first, second and third time-series statistical data to the on-vehicle machine learning classification model to determine whether the peak acceleration value is representative of a collision between the moving vehicle (1) and an obstacle.

10. A vehicle (1) comprising an apparatus (10) according to claim 9.

## Patentansprüche

1. Computerumgesetztes Verfahren (20) zum Erkennen einer Kollision zwischen mindestens einem Hindernis und einem sich bewegenden Fahrzeug (1) durch ein Klassifizierungsmodell zum maschinellen Lernen, wobei das Verfahren die folgenden Schritte umfasst:
a) Erheben von Sensordaten, die Beschleunigungswerte umfassen, aus mindestens einem fahrzeugeigenen Sensor (18) zu einer Vielzahl von entsprechenden Zeitpunkten während der Bewegung des sich bewegenden Fahrzeugs (1);
wobei das computerumgesetzte Verfahren **dadurch gekennzeichnet ist, dass** es umfasst:
b) Begrenzen, wenn ein Spitzenbeschleunigungswert aus den Beschleunigungswerten größer als eine vorbestimmte Schwelle ist, eines ersten Zeitintervalls, das den entsprechenden Zeitpunkt des Spitzenbeschleunigungswertes umfasst, wobei das erste Zeitintervall ein erstes Teilintervall vor dem und angrenzend an den entsprechenden Zeitpunkt der Beschleunigungsspitze und ein zweites Teilintervall nach dem und angrenzend an den entsprechenden Zeitpunkt der Beschleunigungsspitze umfasst, wobei das erste Zeitintervall einer zeitlichen Summe des ersten Teilintervalls und des zweiten Teilintervalls entspricht;
c) Extrahieren eines ersten Satzes von Sensordaten, die während des ersten Zeitintervalls erhoben werden, eines zweiten Satzes von Sensordaten, die während eines zweiten Zeitintervalls vor dem und angrenzend an das erste Zeitintervall erhoben werden, und eines dritten Satzes von Sensordaten, die während eines dritten Zeitintervalls nach dem und angrenzend an das erste Zeitintervall erhoben werden;
d) Verarbeiten des ersten Satzes von Sensordaten, um erste statistische Zeitreihendaten in dem ersten Zeitintervall zu extrahieren, Verarbeiten des zweiten Satzes von Sensordaten, um zweite statistische Zeitreihendaten in dem zweiten Zeitintervall zu extrahieren, und Verarbeiten des dritten Satzes von Sensordaten, um dritte statistische Zeitreihendaten in dem dritten Zeitintervall zu extrahieren; und
e) Anwenden der ersten, zweiten und dritten statistischen Zeitreihendaten auf das Klassifizierungsmodell zum maschinellen Lernen, um zu bestimmen, ob der Spitzenbeschleunigungswert für eine Kollision zwischen dem sich bewegenden Fahrzeug (1) und einem Hindernis repräsentativ ist.

2. Computerumgesetztes Verfahren (20) nach Anspruch 1, wobei der erhobene Beschleunigungswert einen Längsbeschleunigungswert und einen Querbeschleunigungswert umfasst, und wobei die erhobenen Sensordaten ferner eine Giergeschwindigkeit des Fahrzeugs (1), einen Geschwindigkeitswert des Fahrzeugs (1), eine Position eines Gaspedals des Fahrzeugs (1), einen Druckwert eines Bremshauptzylinders des Fahrzeugs (1) und einen Wert einer Lenkwinkelgeschwindigkeit des Fahrzeugs (1) umfassen.

3. Computerumgesetztes Verfahren (20) nach Anspruch 1 oder 2, wobei der Verarbeitungsschritt das Filtern der ersten, zweiten und dritten Sätze von Sensordaten vor dem Extrahieren der ersten, zweiten und dritten statistischen Zeitreihendaten umfasst.

4. Computerumgesetztes Verfahren (20) nach einem der Ansprüche 1 bis 3, wobei die vorbestimmte Schwelle zwischen 0,3 G (2,94 m/s2) und 0,6 G (5,88 m/s2) eingestellt wird.

5. Computerumgesetztes Verfahren (20) nach einem der Ansprüche 1 bis 3, wobei das zweite Zeitintervall zwischen 2 und 5 Sekunden eingestellt wird, und wobei das dritte Zeitintervall zwischen 2 und 10 Sekunden eingestellt wird.

6. Computerumgesetztes Verfahren (20) nach einem der Ansprüche 1 bis 5, wobei die Sensordaten aus dem mindestens einen Sensor über einen Steuergerätenetzwerkbus erhoben werden.

7. Computerumgesetztes Verfahren (20) nach einem der Ansprüche 1 bis 6, wobei das mindestens eine Hindernis ein feststehendes Hindernis oder ein sich bewegendes Hindernis ist.

8. Computerprogrammsatz, umfassend Anweisungen zum Ausführen der Schritte des Verfahrens nach einem der Ansprüche 1 bis 7, wenn der Programmsatz von mindestens einem Computer ausgeführt wird.

9. Gerät (10) zum Erkennen einer Kollision zwischen mindestens einem Hindernis und einem sich bewegenden Fahrzeug (1) durch ein fahrzeugeigenes Klassifizierungsmodell zum maschinellen Lernen, wobei das Gerät umfasst:
- ein Erhebungsmodul (11), das dazu konfiguriert ist, Sensordaten, die Beschleunigungswerte umfassen, aus mindestens einem fahrzeugeigenen Sensor (18) zu einer Vielzahl von entsprechenden Zeitpunkten während der Bewegung des sich bewegenden Fahrzeugs (1) zu erheben;
wobei das Gerät **dadurch gekennzeichnet ist, dass** es umfasst:
- ein Begrenzungsmodul (12), das dazu konfiguriert ist, wenn ein Spitzenbeschleunigungswert aus den Beschleunigungswerten größer als eine vorbestimmte Schwelle ist, ein erstes Zeitintervall, das den entsprechenden Zeitpunkt des Spitzenbeschleunigungswertes umfasst, zu begrenzen, wobei das erste Zeitintervall ein erstes Teilintervall vor dem und angrenzend an den entsprechenden Zeitpunkt der Beschleunigungsspitze und ein zweites Teilintervall nach dem und angrenzend an den entsprechenden Zeitpunkt der Beschleunigungsspitze umfasst, wobei das erste Zeitintervall einer zeitlichen Summe des ersten Teilintervalls und des zweiten Teilintervalls entspricht;
- ein Extraktionsmodul (13), das dazu konfiguriert ist, einen ersten Satz von Sensordaten, der während des ersten Zeitintervalls erhoben wird, einen zweiten Satz von Sensordaten, der während eines zweiten Zeitintervalls vor dem und angrenzend an das erste Zeitintervall erhoben wird, und einen dritten Satz von Sensordaten, der während eines dritten Zeitintervalls nach dem und angrenzend an das erste Zeitintervall erhoben wird, zu extrahieren;
- ein Verarbeitungsmodul (15), das dazu konfiguriert ist, den ersten Satz von Sensordaten zu verarbeiten, um erste statistische Zeitreihendaten in dem ersten Zeitintervall zu extrahieren, den zweiten Satz von Sensordaten zu verarbeiten, um zweite statistische Zeitreihendaten in dem zweiten Zeitintervall zu extrahieren, und den dritten Satz von Sensordaten zu verarbeiten, um dritte statistische Zeitreihendaten in dem dritten Zeitintervall zu extrahieren; und
- ein Anwendungsmodul (14), das dazu konfiguriert ist, die ersten, zweiten und dritten statistischen Zeitreihendaten auf das fahrzeugeigene Klassifizierungsmodell zum maschinellen Lernen anzuwenden, um zu bestimmen, ob der Spitzenbeschleunigungswert für eine Kollision zwischen dem sich bewegenden Fahrzeug (1) und einem Hindernis repräsentativ ist.

10. Fahrzeug (1), umfassend ein Gerät (10) nach Anspruch 9.

## Revendications

1. Procédé mis en œuvre par ordinateur (20) pour détecter une collision entre au moins un obstacle et un véhicule (1) mobile par un modèle de classification par apprentissage machine, le procédé comprenant les étapes suivantes :
a) collecter des données de capteur comprenant des valeurs d'accélération provenant d'au moins un capteur embarqué (18) à une pluralité de moments correspondants pendant que le véhicule (1) mobile est en mouvement ;
le procédé mis en œuvre par ordinateur étant **caractérisé en ce qu'**il comprend ce qui suit :
b) lorsqu'une valeur d'accélération de pic desdites valeurs d'accélération est supérieure à un seuil prédéterminé, délimiter un premier intervalle de temps comprenant le moment correspondant de la valeur d'accélération de pic, le premier intervalle de temps comprenant un premier sous-intervalle antérieur adjacent au moment correspondant du pic d'accélération et un deuxième sous-intervalle ultérieur adjacent au moment correspondant du pic d'accélération, le premier intervalle de temps correspondant à une somme dans le temps du premier sous-intervalle et du deuxième sous-intervalle ;
c) extraire un premier ensemble de données de capteur collectées dans le premier intervalle de temps, un deuxième ensemble de données de capteur collectées dans un deuxième intervalle de temps antérieur adjacent au premier intervalle de temps, et un troisième ensemble de données de capteur collectées dans un troisième intervalle de temps ultérieur adjacent au premier intervalle de temps ;
d) traiter ledit premier ensemble de données de capteur afin d'extraire des premières données statistiques de série chronologique sur le premier intervalle de temps, traiter ledit deuxième ensemble de données de capteur afin d'extraire des deuxièmes données statistiques de série chronologique sur le deuxième intervalle de temps, et traiter ledit troisième ensemble de données de capteur afin d'extraire des troisièmes données statistiques de série chronologique sur le troisième intervalle de temps ; et
e) appliquer lesdites premières, deuxièmes et troisièmes données statistiques de série chronologique au modèle de classification par apprentissage machine pour déterminer si la valeur d'accélération de pic est représentative d'une collision entre le véhicule (1) mobile et un obstacle.

2. Procédé mis en œuvre par ordinateur (20) selon la revendication 1, dans lequel la valeur d'accélération collectée comprend une valeur d'accélération longitudinale et une valeur d'accélération latérale, et dans lequel les données de capteur collectées comprennent en outre un taux de lacet du véhicule (1), une valeur de vitesse du véhicule (1), une position d'une pédale d'accélérateur du véhicule (1), une valeur de pression d'un maître-cylindre de frein du véhicule (1) et une valeur d'une vitesse d'angle de braquage du véhicule (1).

3. Procédé mis en œuvre par ordinateur (20) selon la revendication 1 ou 2, dans lequel l'étape de traitement comprend le filtrage desdits premier, deuxième et troisième ensembles de données de capteur avant d'extraire les premières, deuxièmes et troisièmes données statistiques de série chronologique.

4. Procédé mis en œuvre par ordinateur (20) selon l'une quelconque des revendications 1 à 3, dans lequel le seuil prédéterminé est défini entre 0,3 G (2,94 m/s²) et 0,6 G (5,88 m/s²).

5. Procédé mis en œuvre par ordinateur (20) selon l'une quelconque des revendications 1 à 3, dans lequel le deuxième intervalle de temps est défini entre 2 et 5 secondes, et dans lequel le troisième intervalle de temps est défini entre 2 et 10 secondes.

6. Procédé mis en œuvre par ordinateur (20) selon l'une quelconque des revendications 1 à 5, dans lequel les données de capteur sont collectées à partir dudit au moins un capteur via un bus de réseau CAN.

7. Procédé mis en œuvre par ordinateur (20) selon l'une quelconque des revendications 1 à 6, dans lequel l'au moins un obstacle est un obstacle immobile ou un obstacle mobile.

8. Ensemble de programmes informatiques comportant des instructions pour exécuter les étapes du procédé selon l'une quelconque des revendications 1 à 7 lorsque ledit ensemble de programmes est exécuté par au moins un ordinateur.

9. Appareil (10) de détection d'une collision entre au moins un obstacle et un véhicule (1) mobile par un modèle de classification par apprentissage machine embarqué, l'appareil comprenant :
- un module de collecte (11) configuré pour collecter des données de capteur comprenant des valeurs d'accélération provenant d'au moins un capteur embarqué (18) à une pluralité de moments correspondants pendant que le véhicule (1) mobile est en mouvement ;
l'appareil étant **caractérisé en ce qu'**il comprend :
- un module de délimitation (12) configuré pour, lorsqu'une valeur d'accélération de pic desdites valeurs d'accélération est supérieure à un seuil prédéterminé, délimiter un premier intervalle de temps comprenant le moment correspondant de la valeur d'accélération de pic, le premier intervalle de temps comprenant un premier sous-intervalle antérieur adjacent au moment correspondant du pic d'accélération et un deuxième sous-intervalle ultérieur adjacent au moment correspondant du pic d'accélération, le premier intervalle de temps correspondant à une somme dans le temps du premier sous-intervalle et du deuxième sous-intervalle ;
- un module d'extraction (13) configuré pour extraire un premier ensemble de données de capteur collectées dans le premier intervalle de temps, un deuxième ensemble de données de capteur collectées dans un deuxième intervalle de temps antérieur adjacent au premier intervalle de temps, et un troisième ensemble de données de capteur collectées dans un troisième intervalle de temps ultérieur adjacent au premier intervalle de temps ;
- un module de traitement (15) configuré pour traiter ledit premier ensemble de données de capteur afin d'extraire des premières données statistiques de série chronologique sur le premier intervalle de temps, pour traiter ledit deuxième ensemble de données de capteur afin d'extraire des deuxièmes données statistiques de série chronologique sur le deuxième intervalle de temps, et pour traiter ledit troisième ensemble de données de capteur afin d'extraire des troisièmes données statistiques de série chronologique sur le troisième intervalle de temps ; et
- un module d'application (14) configuré pour appliquer lesdites premières, deuxièmes et troisièmes données statistiques de série chronologique au modèle de classification par apprentissage machine embarqué pour déterminer si la valeur d'accélération de pic est représentative d'une collision entre le véhicule (1) mobile et un obstacle.

10. Véhicule (1) comprenant un appareil (10) selon la revendication 9.
